# EUROPÄISCHE PATENTSCHRIFT

(11) **EP 1 800 991 B1**
(45) Veröffentlichungstag und Bekanntmachung des Hinweises auf die Patenterteilung: **29.04.2009**
(21) Anmeldenummer: 06125185.6
(22) Anmeldetag: 01.12.2006
(51) Int. Cl.: B62D 5/00, B62D 7/08, B62D 7/22

(54) **Lenkbare Achse**
Steerable axle
Essieu directeur

(30) Priorität: 22.12.2005 DE 102005061522
(43) Veröffentlichungstag der Anmeldung: 27.06.2007
(73) Patentinhaber: ZF-Lenksysteme GmbH, 73527 Schwäbisch Gmünd (DE)
(72) Erfinder: Kogel, Walter, 73453 Abtsgmünd (DE); Braun, Andreas, 73116 Wäschenbeuren (DE)

(56) Entgegenhaltungen:
- DE-A1- 10 058 628
- DE-A1- 10 323 732
- DE-A1- 19 963 871
- JP-A- 59 206 261

## Beschreibung

Die Erfindung betrifft eine lenkbare Achse für ein Fahrzeug nach dem Oberbegriff

des Anspruchs 1.

Es sind Lenksysteme insbesondere für Nutzkraftfahrzeuge bekannt, die zur Lenk-winkelverstellung lenkbarer Räder an einer Starrachse dienen. Solche Lenksysteme weisen ein Lenkgetriebe als getriebliche Verbindung zwischen einer Lenkhandhabe und gelenkten Rädern auf, das beispielsweise als hydraulisch unterstütztes Kugelmutter-Umlauflenkgetriebe gebildet ist. Eine Drehbewegung an der Lenkhandhabe wird dabei in eine Schwenkbewegung eines Lenkstockhebels des Lenkgetriebes umgewandelt. Der Lenkstockhebel ist gelenkig über eine Lenkstange mit Spurhebeln zur Lenkwinkelverstellung der Räder verbunden.

Der starre Achskörper der Starrachse ist über Längslenker, die gelenkig zu beiden Seiten der Fahrzeuglängsachse über je ein Lagerauge an dem Fahrzeugaufbau gelagert sind und über Federbeine mit dem Fahrzeug verbunden. Anstatt der Längs-lenker können auch Blattfedern eingesetzt sein. Der horizontale Abstand der Längs-achse des Achskörpers zu dem Lagerauge der Längslenker bzw. der Blattfedern ist different zu dem horizontalen Abstand der Längsachse des Achskörpers zu dem Gelenk zwischen Lenkstockhebel und der Lenkstange.

Beim Einfedern des starren Achskörpers ergeben sich dadurch Lenkfehler, bedingt durch die Hub- und/oder Winkeldifferenz von Lenkstange zu Längslenker oder Blatt-feder.

Die EP 1 275 574 A2 beschreibt eine lenkbare Achse für ein Nutzfahrzeug mit einem quer zur Fahrzeuglängsachse angeordneten gefederten, starren Achskörper, welcher über beidseitig der Fahrzeuglängsmittelebene angeordnete Längslenker mit einem Fahrzeugaufbau verbunden ist, und einer Lenkeinrichtung zur Übertragung von Lenk-kräften auf Radträger, welche an beiden Enden des Achskörpers um zugeordnete Lenkachsen schwenkbar gelagert sind. Um die oben beschriebenen Lenkfehler bei dieser lenkbaren Achse zu vermeiden, ist die vorzugsweise als Lenkgetriebe ausge-bildete Lenkeinrichtung an einem der Längslenker festgelegt. Die Lenkeinrichtung ist bevorzugt in der Nähe eines Lagerauges eines Längslenkers an diesem festgelegt, wodurch sich beim Einfedern der Achse an den Bauteilen der Lenkeinrichtung und insbesondere des Lenkgetriebes nur geringfügige Schwenkbewegungen und damit Lenkfehler ergeben.

Die Lenkpräzision dieser lenkbaren Achse ist nicht optimiert und die Achse ist durch die Anordnung des Lenkgetriebes und der Lenkeinrichtung an dem Längslenker in Bezug auf ihren Bauraumbedarf ungünstig.

Die DE 100 58 628 A1 beschreibt eine lenkbare Achse für ein Kraftfahrzeug mit im Wesentlichen einer an einem Fahrzeugrahmen festgelegten Starrachse, an welcher endseitig lenkbare Räder gelenkig gehalten sind und mit einem die Lenkbewegungen von einem Lenkrad auf die Räder über diverse Übertragungselemente übertragenden Lenkgetriebe. Das Lenkgetriebe ist einerseits um eine quer zur Fahrtrichtung ver-laufende horizontale Drehachse eines Schwenklagers in Fahrzeuglängsrichtung schwenkbar an einer Seite des Fahrzeugrahmens angeordnet. Andererseits ist das Lenkgetriebe über zusätzliche, in etwa auf die Kinematik der Übertragungselemente abgestimmte Übertragungsorgane einer weiteren Lenkverbindung gelenkig mit der Starrachse des Kraftfahrzeugs mittelbar oder unmittelbar verbunden. Einlenkfehler durch Horizontalstöße an der lenkbaren Achse werden wirksam unterbunden.

Die lenkbare Achse baut komplex und ihre Lenkpräzision ist nicht optimiert.

Der Erfindung liegt die Aufgabe zugrunde eine lenkbare Achse mit einem gefederten, starren Achskörper zu schaffen, deren Lenkfehler minimiert ist.

Die Aufgabe wird mit einer lenkbaren Achse mit den Merkmalen des Anspruchs 1 gelöst.

Dadurch dass von einer Steuer- und/oder Regelungseinrichtung mit Wegsensor der aktkuelle Federweg oder die Einfederung des starren Achskörpers der lenkbaren Achse relativ zu einem Fahrzeugaufbau gemessen wird und ein dem Federweg proportionales Signal zur Korrektur des von der Lenkhandhabe in eine Überlager-ungseinrichtung an der getrieblichen Einrichtung zwischen Lenkhandhabe und den lenkbaren Rädern eingegebenen Soll-Lenkwinkels eingegeben wird, wird ein Lenk-fehler, hervorgerufen durch unterschiedliche Hübe und Drehwinkel einer Lenkstange der getrieblichen Einrichtung im Vergleich zu Längslenkern oder Blattfedern, mit denen der starre Achskörper an dem Fahrzeugbau angelegt ist, exakt, adaptiv aus-geglichen.

Bevorzugte Ausführungen ergeben sich aus den Unteransprüchen.

Die getriebliche Einrichtung ist bevorzugt ein Lenkgetriebe, das mit einem hydro-statischen oder elektrischen Servomotor gekoppelt sein kann.

Die Überlagerungseinrichtung ist bevorzugt auf der Niedermomentenseite des Lenk-getriebes, also auf einer Eingangsseite für eine Lenkwelle mit einer Lenkhandhabe beispielsweise angeordnet und als Überlagerungsgetriebe mit einem Stellmotor ge-bildet.

Das Signal zur Lenkwinkelkorrektur an dem Stellmotor des Überlagerungsgetriebes kann von der Steuer- und/oder Regelungseinrichtung nicht nur in Abhängigkeit von dem aktuell gemessenen Federweg des starren Achskörpers generiert werden, sondern in Abhängigkeit von gemessenen Fahrtparametern, wie dem Lenkwinkel-Istwert an den lenkbaren Rädern, vorberechnet werden.

Die lenkbare Achse ist als Starrachse mit gelenkiger Aufhängung an einem Fahrzeug-aufbau mittels beidseits der Fahrzeuglängsachse angeordneter Längslenker oder Blattfedern gebildet. Die getriebliche Einrichtung zur Übertragung von Lenkbewe-gungen der Lenkhandhabe auf die lenkbaren Räder ist als Lenkgetriebe mit Dreh-bewegung eines Lenkstockhebels, wie etwa als Kugelumlauflenkung gebildet, wobei ein Lenkstockhebel des Lenkgetriebes über ein Gelenk mit einer Lenkstange ver-bunden ist, und die Lenkstange mit Spurhebeln gelenkig verbunden ist. Das Gelenk zwischen Lenkstockhebel und Lenkstange hat einen anderen horizontalen Abstand von der Längsachse des starren Achskörpers als der Abstand eines Lagerauges des Längslenkers oder Blattfedern an dem Fahrzeugaufbau zu der Längsachse des starren Achskörpers.

Das Lenkgetriebe kann Teil einer Hilfskraft- oder Fremdkraftlenkung sein und zu-sammen mit einer manuell über die Lenkhandhabe eingegebenen Lenkkraft und einer Betätigungskraft eines hydraulischen oder elektrischen Servomotors angetrieben sein.

Es kann auch zweckmäßig sein anstatt des Lenkgetriebes die getriebliche Einrichtung als einen von der Steuer- und/oder Regelungseinrichtung unmittelbar angesteuerten Aktuator - im Sinne einer Fremdkraftlenkung - auszubilden. Die Überlagerungs-einrichtung ist dabei bevorzugt als elektronisches Bauteil ohne mechanische Komponenten, als Mikrorechner etwa, ausgebildet.

Die Überlagerungseinrichtung kann auschließlich als elektrische oder hydraulische Schaltung innerhalb der Steuer- und/oder Regelungseinrichtung ausgeführt sein, oder auch mechanisch als Planetenradgetriebe, als Wellgetriebe oder als Hohlradpaar-system im Sinne eines IKONA - Getriebes gebildet sein, wobei der Soll-Lenkwinkel-eingabe an der Lenkhandhabe ein Korrektur-Winkelwert, vorgegeben durch die Steuer- und/oder Regelungseinrichtung, überlagert wird.

Die lenkbare Achse eignet sich für den Einsatz in einem Personenkraftwagen oder Nutzkraftwagen.

Die Erfindung wird nun näher anhand eines Ausführungsbeispiels beschrieben und anhand der beiliegenden Zeichnung wiedergegeben. In der Zeichnung zeigt:

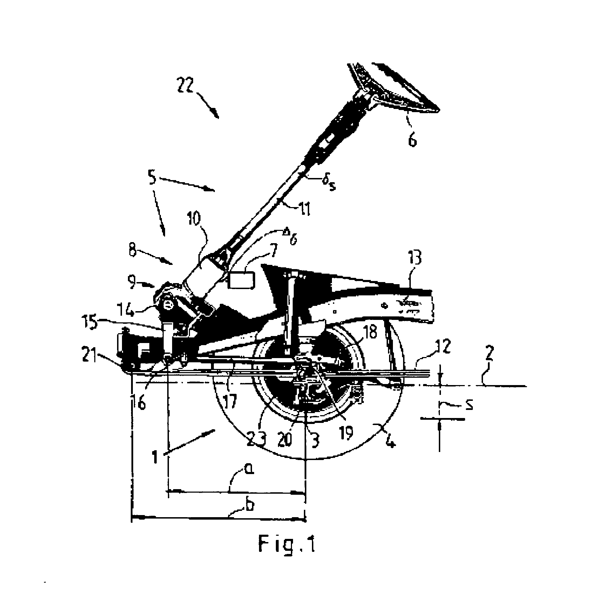

Fig. 1 einen schematischen Längsschnitt durch einen Vorderwagen eines Fahrzeugs mit einer erfindungsgemäßen lenkbaren Achse.

In Fig. 1 ist in einem schematischen Längsschnitt ein Vorderwagen 22 eines leichten Nutzkraftwagens gezeigt, der mit einer lenkbaren Achse 1 mit einem starren Achs-körper 3 versehen ist. An dem starren Achskörper 3 sind in an sich bekannter Weise über Achsschenkel gelagerte, in ihrem Lenkwinkel verstellbare, lenkbare Räder 4 fest-gelegt. Ein Soll-Lenkwinkel δₛ kann an einer Lenkhandhabe 6, die drehfest mit einer Lenkwelle 11 verbunden ist, eingegeben werden und wird von einer getrieblichen Einrichtung 5 zwischen der Lenkhandhabe 6 und den lenkbaren Rädern 4 übertragen. Die getriebliche Einrichtung 5 weist ein Lenkgetriebe 9 mit Drehbewegung auf, das als hydraulisch unterstütztes Lenkgetriebe 14 mit Lenkstockhebel 15 gebildet ist und zur Verschwenkung des Lenkstockhebels 15 dient. Der Lenkstockhebel 15 ist über ein Gelenk 16 mit einer Lenkstange 17, die in etwa parallel zu der Fahrzeuglängsachse 2 und etwa quer zu der Längsachse 20 des starren Achskörpers 3 gelagert ist, ver-bunden. Die Lenkstange 17 dient zur Übertragung der Lenkbewegung der Lenkhand-habe 6 auf Spurhebel 19 und eine Spurstange 23, die die Spurhebel 19 in bekannter Weise gelenkig verbindet. Die Lenkstange 17 ist über ein Gelenk 18 mit dem Spur-hebel 19 verbunden.

Der starre Achskörper 3 ist an einem Fahrzeugaufbau 13 u.a. mit beiderseits der Fahrzeuglängsachse 2 angeordneten Blattfedern 12 festgelegt. In dem in Fig. 1 gezeigten Fahrzustand des Fahrzeugs sind die Blattfedern 12 eingefedert. Die Blattfedern 12 sind an je einem Lagerauge 21 gelenkig mit dem Fahrzeugaufbau 13 verbunden.

Der Abstand a der Achse des Gelenks 16 zwischen dem Lenkstockhebel 15 und der Lenkstange 17 von der Längsachse 20 des starren Achskörpers 3 ist geringer als der Abstand b des Lagerauges 21 von der Längsachse 20 des starren Achskörpers 3, wodurch sich beim Einfedern der Blattfedern 12 Weg- und Winkeldifferenzen zwischen den Blattfedern 12 und der Lenkstange 17, die zu unerwünschten Lenk-bewegungen führen, ergeben.

Zur Kompensation dieser unerwünschten Lenkbewegungen ist vorgesehen, den Federweg s des starren Achskörpers 3 zu messen und von einer Steuer-und/oder Regelungseinrichtung 7 zu erfassen und so in ein Stellsignal Δ_{δ} aufzubereiten, dass eine Überlagerungseinrichtung 8, die vorzugsweise als von einem Servomotor an-getriebenes Überlagerungsgetriebe 10 gebildet ist, in der Lage ist, einen Korrektur-winkel in die Niedermomentenseite der Lenkwelle 11 einzugeben.

## Patentansprüche

1. Lenkbare Achse für ein Fahrzeug mit einem quer zur Fahrzeuglängsachse (2) angeordneten, gefederten starren Achskörper (3) an welchem endseitig lenkbare Räder (4) gelenkig gehalten sind, die mit einem Lenkgetriebe (9) zur Übertragung von Lenkbewegungen einer Lenkhandhabe (6) verbunden sind und einer Überlagerungseinrichtung (8) zur Einleitung eines Korrektur-Lenkwinkels, **dadurch gekennzeichnet, dass** der Federweg (s) des starren Achskörpers (3) von einer Steuer- und/oder Regelungseinrichtung (7) erfasst ist und der Überlagerungseinrichtung (8) ein Signal (Δ_{δ}) zur Korrektur der Übertragung von einem an der Lenkhandhabe (6) eingegebenen Lenkwinkel-Sollwert (δₛ) mittels eines der Überlagerungseinheit zugeordneten Überlagerungsgetriebe (10) auf die lenkbaren Räder (4) in Abhängigkeit von dem Federweg (s) zugeführt ist.

2. Lenkbare Achse nach Anspruch 1, **dadurch gekennzeichnet, dass** die Überlagerungseinrichtung (8) zwischen dem Lenkgetriebe (9) und der Lenkhandhabe (6) angeordnet ist.

3. Lenkbare Achse nach einem der Ansprüche 1 oder 2, **dadurch gekennzeichnet, dass** durch die Steuer- und/oder Regelungseinrichtung (7) das Signal (Δ_{δ}) in Abhängigkeit von einem Lenkwinkel-Istwert und weiterer Fahrzeug- und/oder Fahrt-spezifischer Signale berechnet ist.

4. Lenkbare Achse nach einem der Ansprüche 1 bis 3, **dadurch gekennzeichnet, dass** der starre Achskörper (3) über beidseitig der Fahrzeuglängsachse (2) angeordnete Längslenker und/oder Blattfedern (12) mit einem Fahrzeugaufbau (13) verbunden ist.

5. Lenkbare Achse nach Anspruch 4, **dadurch gekennzeichnet, dass** das Lenkgetriebe (9) zur Übertragung von Lenkbewegungen der Lenkhandhabe (6) auf die lenkbaren Räder (4) ein Getriebe (14) mit Drehbewegung eines Lenkstockhebels (15) ist, wobei der Lenkstockhebel (15) über ein Gelenk (16) mit einer Lenkstange (17) und diese mit einem Gelenk (18) mit einem Spurhebel (19) verbunden ist.

6. Lenkbare Achse nach Anspruch 5, **dadurch gekennzeichnet, dass** das Gelenk (16) zwischen Lenkstockhebel (15) und Lenkstange (17) von der Längsachse (20) des starren Achskörpers (3) in einem anderen Abstand (a) angeordnet ist, als der Abstand (b) eines Lagerauges (21) der Längslenker oder Blattfedern (12) zu der Längsachse (20) des starren Achskörpers (3).

7. Lenkbare Achse nach einem der Ansprüche 1 bis 6, **dadurch gekennzeichnet, dass** die Überlagerungseinrichtung (8) ein Planetenradgetriebe oder ein Wellgetriebe oder ein Hohlradpaarsystem oder ein elektrischer oder hydraulischer Steiler ist.

## Claims

1. Steerable axle for a vehicle having a sprung rigid axle element (3) which is arranged transversely with respect to the vehicle longitudinal axis (2) and on which wheels (4) are held in an articulated manner, which wheels (4) can be steered on the end side and are connected to a steering gear (9) for transmitting steering movements of a steering handle (6), and having a superimposition device (8) for introducing a correction steering angle, **characterized in that** the spring travel (s) of the rigid axle element (3) is detected by a control and/or regulating device (7), and the superimposition device (8) is fed a signal (Δ_{δ}) for correcting the transmission of a steering-angle setpoint value (δₛ) which is input at the steering handle (6) by means of a superimposition gear mechanism (10) which is assigned to the superimposition unit to the steerable wheels (4) as a function of the spring travel (s).

2. Steerable axle according to Claim 1, **characterized in that** the superimposition device (8) is arranged between the steering gear (9) and the steering handle (6).

3. Steerable axle according to either of Claims 1 and 2, **characterized in that** the signal (Δ_{δ}) is calculated by the control and/or regulating device (7) as a function of a steering-angle actual value and further vehicle-specific and/or driving-specific signals.

4. Steerable axle according to one of Claims 1 to 3, **characterized in that** the rigid axle element (3) is connected to a vehicle body (13) via leaf springs (12) and/or longitudinal links which are arranged on both sides of the vehicle longitudinal axis (2).

5. Steerable axle according to Claim 4, **characterized in that** the steering gear (9) is, for transmitting steering movements of the steering handle (6) to the steerable wheels (4), a gear mechanism (14) with a rotational movement of a steering gear arm (15), the steering gear arm (15) being connected via a joint (16) to a steering rod (17) and the latter being connected by way of a joint (18) to a track-rod arm (19).

6. Steerable axle according to Claim 5, **characterized in that** the joint (16) between the steering gear arm (15) and the steering rod (17) is arranged at a different spacing (a) from the longitudinal axis (20) of the rigid axle element (3) than the spacing (b) of a bearing socket (21) of the longitudinal links or leaf springs (12) from the longitudinal axis (20) of the rigid axle element (3).

7. Steerable axle according to one of Claims 1 to 6, **characterized in that** the superimposition device (8) is a planetary gear mechanism or a harmonic drive or an internal-gear pair system or an electric or hydraulic actuating element.

## Revendications

1. Essieu directeur pour un véhicule avec un corps d'essieu (3) rigide suspendu, disposé transversalement à l'axe longitudinal (2) du véhicule, sur lequel des roues directrices (4) sont montées de manière articulée aux extrémités, lesquelles sont reliées à un mécanisme de direction (9) pour la transmission de mouvements de direction d'un volant de direction (6), et avec un dispositif de superposition (8) pour l'application d'une correction de l'angle de direction, **caractérisé en ce que** la course de la suspension (s) du corps d'essieu rigide (3) est détectée par un dispositif de commande et/ou de régulation (7) et un signal (Δ_{δ}) est envoyé au dispositif de superposition (8) pour la correction de la transmission d'une valeur de consigne d'angle de direction (δₛ), introduite au volant de direction (6), aux roues directrices (4) au moyen d'un mécanisme de superposition (10) associé à l'unité de superposition, en fonction de la course de la suspension (s).

2. Essieu directeur selon la revendication 1, **caractérisé en ce que** le dispositif de superposition (8) est placé entre le mécanisme de direction (9) et le volant de direction (6).

3. Essieu directeur selon l'une quelconque des revendications 1 ou 2, **caractérisé en ce que** le signal (Δ_{δ}) est calculé par le dispositif de commande et/ou de régulation (7) en fonction d'une valeur réelle de l'angle de direction et d'autres signaux spécifiques du véhicule et/ou du déplacement.

4. Essieu directeur selon l'une quelconque des revendications 1 à 3, **caractérisé en ce que** le corps d'essieu rigide (3) est relié à une superstructure du véhicule (13) au moyen de bras oscillants longitudinaux et/ou de ressorts à lames (12) disposés de part et d'autre de l'axe longitudinal du véhicule (2).

5. Essieu directeur selon la revendication 4, **caractérisé en ce que** le mécanisme de direction (9) pour la transmission de mouvements de direction du volant de direction (6) aux roues directrices (4) est un mécanisme (14) avec un mouvement de rotation d'un levier de commande de direction (15), dans lequel le levier de commande de direction (15) est relié par une articulation (16) à une bielle de direction (17) et celle-ci est reliée par une articulation (18) à un levier d'accouplement (19).

6. Essieu directeur selon la revendication 5, **caractérisé en ce que** l'articulation (16) entre le levier de commande de direction (15) et la bielle de direction (17) est disposé à une distance (a) de l'axe longitudinal (20) du corps d'essieu rigide (3) autre que la distance (b) d'une ouverture de palier (21) des bras oscillants longitudinaux et/ou des ressorts à lames (12) par rapport à l'axe longitudinal (20) du corps d'essieu rigide (3).

7. Essieu directeur selon l'une quelconque des revendications 1 à 6, **caractérisé en ce que** le dispositif de superposition (8) est un engrenage à roues planétaires ou un mécanisme ondulé ou un système de paires de roues creuses ou un actionneur électrique ou pneumatique.
